# EUROPEAN PATENT APPLICATION

(11) **EP 3 305 433 A1**
(43) Date of publication of application: **11.04.2018**
(21) Application number: 16802919.7
(22) Date of filing: 11.04.2016
(51) Int. Cl.: B21F 35/00, B21F 1/02, B21F 11/00, B21F 23/00

(54) **DEVICE FOR MANUFACTURING COIL SPRING AND METHOD FOR MANUFACTURING COIL SPRING**

(30) Priority: 04.06.2015 JP 2015113849
(71) Applicant: NHK Spring Co., Ltd., Yokohama-shi, Kanagawa 236-0004 (JP)
(72) Inventor: FURUSE, Takeshi, Yokohama-shi Kanagawa 236-0004 (JP); KUMAGAWA, Yusuke, Yokohama-shi Kanagawa 236-0004 (JP)
(74) Representative: Awapatent AB
(86) International application number: PCT/JP2016/061705
(87) International publication number: WO 2016/194482

(57) **Abstract**

The coil spring manufacturing device (1A) includes a first continuous material mounting portion (4), a second continuous material mounting portion (5), a straightener (7), a cutter (8) which cuts a material (2), a short material mounting portion (9) on which a short material (2') obtained by the cutting is mounted, and a coiling machine (10). The material (2) reeled out from a first continuous material (2A) or a second continuous material (2B) is cut by the cutter (8). The coil spring manufacturing device (1A) can switch a process among a first continuous material coiling process of manufacturing a coil spring by using the material (2) reeled out from the first continuous material (2A), a second continuous material coiling process of manufacturing a coil spring by using the material (2) reeled out from the second continuous material (2B), and a short material coiling process of manufacturing a coil spring by using the short material (2').

## Description

### Technical Field

The present invention relates to a device for manufacturing a coil spring which manufactures a coil spring by using a long continuous material or a short material which is cut to a predetermined length, and a method for manufacturing the coil spring.

### Background Art

As a coiling machine suitable for manufacturing coil springs of various shapes in quantity, a coiling machine not having a mandrel is known. Patent Literature 1 or Patent Literature 2 relates to an example of a coiling machine not having a mandrel. This type of coiling machine bends a material of a coil spring sent out from a distal end of a material guide in an arc shape by a first pin and a second pin, and also pitches the coil spring by a pitch tool. The positions of the first pin and the second pin are controlled based on a computer program stored in a control unit, and control data corresponding to a shape of the coil spring.

A long material (a continuous material) supplied continuously to the coiling machine is wound like a hoop so that it can be conveniently carried or stored. This continuous material is mounted on a reel of a continuous material mounting portion. By rotating the reel, a material of the coil spring is reeled out from the continuous material. The material reeled out is supplied to the coiling machine. By using the continuous material, a coil spring formed of the same type of material can be manufactured in quantity efficiently.

### Citation List

### Patent Literatures

Patent Literature 1: JP H11-197775 A
Patent Literature 2: JP 2013-226584 A

### Summary of Invention

### Technical Problem

In the case of a coiling machine which uses the above-mentioned continuous material, if a material needs to be changed according to the type of the spring (wire diameter or steel type), the continuous material mounted on the continuous material mounting portion must be exchanged. Accordingly, it takes time and manpower to perform the preparation operation for the material exchange. For this reason, manufacturing of a coil spring which uses a hoop material is unsuitable for limited production of diversified products.

In order to manufacture a wide variety of coil springs in small quantities, using a material cut to a predetermined length in advance (i.e., a short material) is considered. However, in manufacturing a coil spring by the short material, it is necessary to perform a distal end portion shaping operation necessary at the time of starting the coiling for each coil spring. The distal end portion shaping operation has conventionally been performed by a worker who manually operates an actuator. In this manual operation, while a distal end portion of the material is moved toward the first pin, the distal end portion of the material is bent to some degree by moving the first pin. After that, the material is bent in an arc shape while moving the distal end portion of the material toward the second pin. These kinds of works require skill. Furthermore, performing the distal end portion shaping operation for each and every short material is extremely inefficient, and extra caution must be paid for safety. For such reasons, conventional techniques leave room for improvement.

Accordingly, an object of the present invention is to provide a coil spring manufacturing device capable of efficiently manufacturing a coil spring by using a long continuous material or a short material which is cut to a predetermined length, and a method for manufacturing the coil spring.

### Solution to Problem

A coil spring manufacturing device according to one embodiment comprises a coiling machine, a continuous material feed portion, a straightener, a cutter, a short material mounting portion, and guide means (for example, a guide roller). The continuous material feed portion supplies a material reeled out from a continuous material wound like a hoop to the coiling machine. The straightener is disposed between the continuous material feed portion and the coiling machine, and corrects the material reeled out from the continuous material to be straight. The cutter is arranged at a downstream side of a movement direction of the material with respect to the straightener, and cuts the material. On the short material mounting portion, a short material cut to a predetermined length is mounted. The guide means supplies the material reeled out from the continuous material feed portion, or the short material taken out from the short material mounting portion to the coiling machine. An example of the continuous material feed portion includes a first continuous material mounting portion and a second continuous material mounting portion. On the first continuous material mounting portion, a first continuous material wound like a hoop is mounted. On the second continuous material mounting portion, a second continuous material wound like a hoop is mounted.

An example of the coiling machine includes a material feed roller, a material guide, a first pin, a second pin, a pitch tool, a cutting tool, and a control unit. The material feed roller moves the material. The material is inserted into the material guide. The material which is sent out from a distal end of the material guide contacts the first pin. The second pin is disposed at a front side of a movement direction of the material with respect to the first pin. By bending the material between the first pin and the second pin, an arc portion is formed between the first pin and the second pin. The pitch tool is disposed at the front side of the movement direction of the material with respect to the second pin, and the material contacts the pitch tool. The cutting tool is disposed between the second pin and the pitch tool, and cuts the material between the cutting tool and the mandrel.

The control unit automates a distal end portion shaping operation of the material. The control unit includes means for advancing a distal end portion of the material toward the first pin, and detection means for detecting a position of the distal end portion of the material. Further, the control unit includes means for bending the distal end portion in a direction of approaching the mandrel by the first pin in a state in which the distal end portion reached the first pin, and means for forming a distal-end-side arc portion by bending the distal end portion between the first pin and the second pin.

### Advantageous Effects of Invention

According to the present invention, a material reeled out from a long and hooplike continuous material mounted on a long material feed portion, or a short material taken out from the short material mounting portion can be selectively used according to need, and a plurality of kinds of coil springs can be manufactured efficiently.

### Brief Description of Drawings

FIG. 1 is a plan view schematically showing a coil spring manufacturing device according to a first embodiment.
FIG. 2 is a plan view schematically showing a coil spring manufacturing device according to a second embodiment.
FIG. 3 is a plan view of a case where the coil spring manufacturing device shown in FIG. 2 is used, and a coil spring is manufactured by a first continuous material.
FIG. 4 is a plan view of a case where the coil spring manufacturing device shown in FIG. 2 is used, and a coil spring is manufactured by a second continuous material.
FIG. 5 is a plan view of a case where the coil spring manufacturing device is used, and a short material is manufactured by the second continuous material.
FIG. 6 is a plan view of a case where the coil spring manufacturing device is used, and a coil spring is manufactured by the first continuous material and a short material is manufactured by the second continuous material.
FIG. 7 is a plan view of a case where the coil spring manufacturing device is used, and a coil spring is manufactured by the short material.
FIG. 8 is a flowchart showing a short material manufacturing process.
FIG. 9 is a flowchart showing steps of selecting the material.
FIG. 10 is a flowchart showing a coil spring manufacturing process.
FIG. 11 is a front view which schematically shows a coiling machine according to one embodiment.
FIG. 12 is a block diagram showing an electrical structure of the coiling machine.
FIG. 13 is a flowchart showing an example of a function of a control unit of the coiling machine.
FIG. 14 is a front view of the coiling machine before a material is supplied.
FIG. 15 is a front view showing a state in which a distal end portion of a material is projected from a material guide in the coiling machine.
FIG. 16 is a front view showing a state in which the distal end portion of the material contacts a first pin in the coiling machine.
FIG. 17A is a side view showing one example of a positional relationship between the first pin and a second pin of the coiling machine.
FIG. 17B is a side view showing another example of a positional relationship between the first pin and the second pin of the coiling machine.
FIG. 18 is a cross-sectional view showing one example of a direction in which the distal end portion of the material is rotated.
FIG. 19 is a front view showing a state in which the distal end portion of the material is moved near the second pin in the coiling machine.
FIG. 20 is a front view showing a state in which the distal end portion of the material is moved near a pitch tool in the coiling machine.
FIG. 21 is a front view showing a state in which a scrap portion of the material is cut off in the coiling machine.

### Mode for Carrying Out the Invention

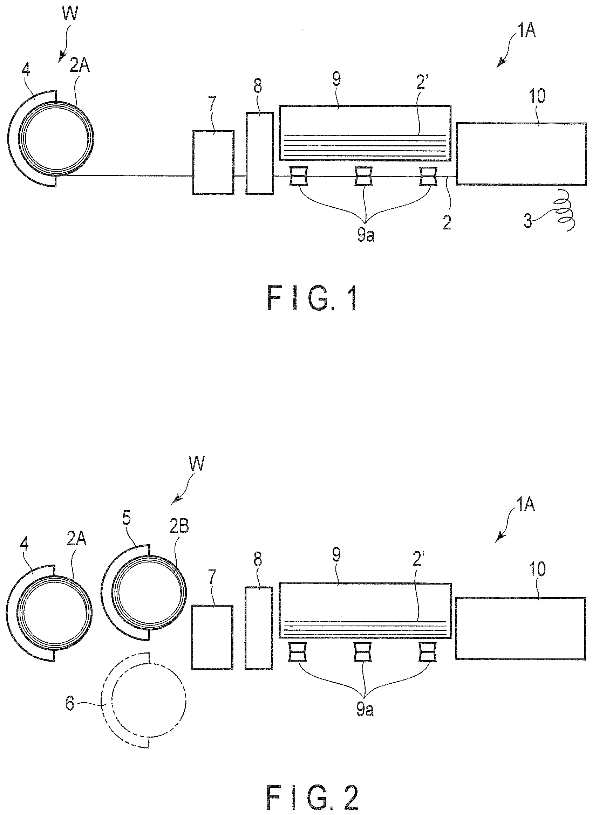

FIG. 1 shows a coil spring manufacturing device 1 according to a first embodiment. The coil spring manufacturing device 1 manufactures a coil spring 3 by forming a rod-shaped material 2 made of spring steel into a helical shape.

The coil spring 3 is manufactured by forming the material 2 spirally at a certain pitch (which may not be constant). The shape of the coil spring 3 can be various, and a coil diameter and a pitch, for example, may be changed according to the position of turns from an end. The coil spring may be formed in various shapes such as a cylindrical coil spring, a barrel-shaped coil spring, an hourglass coil spring, a tapered coil spring, a variable pitch coil spring, or a coil spring having a negative pitch portion.

The coil spring manufacturing device 1 according to the present embodiment includes a continuous material mounting portion 4 which functions as a continuous material feed portion W, a straightener 7, a cutter 8 (for example, a cutting grinder), a short material mounting portion 9, guide rollers 9a which function as guide means, a coiling machine 10, etc.

On a reel of the continuous material mounting portion 4, a continuous material 2A is mounted rotatably about a vertical axis. The continuous material 2A is composed of a long material 2 wound like a hoop. The continuous material 2A may be referred to as a hoop material. The continuous material 2A is a heavy load which may weigh several tons in some cases, and the entire length of the material 2 which is unwound may be several hundred meters or more.

The continuous material 2A wound like a hoop has more or less of a bend. For this reason, the material 2 which is reeled out from the continuous material 2A is corrected to be straight by the straightener 7. By cutting the continuous material 2A corrected to be straight by the cutter 8, a short material 2' of a predetermined length (for example, several meters or so) is obtained. The cutter 8 is arranged at a downstream side of a movement direction of the material 2 with respect to the straightener 7. The short material 2' obtained by the cutting is mounted on a material stand of the short material mounting portion 9.

The coil spring manufacturing device 1 of the present embodiment (FIG. 1) manufactures the coil spring 3 by using the continuous material 2A on the continuous material mounting portion 4. The material 2 which is reeled out from the continuous material 2A is corrected to be straight by the straightener 7. Further, the continuous material 2A is supplied to the coiling machine 10 via the guide rollers 9a. The coiling machine 10 manufactures the coil spring 3 by forming the supplied continuous material 2A into a helical shape. For example, the material 2 which is reeled out from the continuous material 2A passes by the cutter 8 (without having the material 2 cut), and is supplied to the coiling machine 10. The structure and the operation of the coiling machine 10 will be described later.

The coil spring manufacturing device 1 (FIG. 1) can manufacture the short material 2'. The short material 2' can be obtained by cutting the material 2, which is reeled out from the continuous material 2A on the continuous material mounting portion 4, to a predetermined length by the cutter 8. The short material 2' obtained by the cutting is mounted on the material stand of the short material mounting portion 9. When the coil spring 3 is to be manufactured by using the short material 2', the short material 2' is supplied to the coiling machine 10 one by one from the short material mounting portion 9. The coiling machine 10 manufactures the coil spring 3 by using the short material 2'. Alternatively, the short material may be manufactured by cutting the continuous material by a cutting apparatus provided at a position different from where the cutter 8 is provided. The short material obtained by the cutting is mounted on the short material mounting portion 9.

FIG. 2 shows a coil spring manufacturing device 1A according to a second embodiment. The coil spring manufacturing device 1A includes a first continuous material mounting portion 4, a second continuous material mounting portion 5, a straightener 7, a cutter 8, a short material mounting portion 9, guide rollers 9a which function as guide means, a coiling machine 10, etc.

On the first continuous material mounting portion 4, a first continuous material 2A (a first hoop material) composed of a long material 2 wound like a hoop is mounted. Also on the second continuous material mounting portion 5, a second continuous material 2B (a second hoop material) composed of long material 2 wound like a hoop is mounted. The first continuous material 2A and the second continuous material 2B may be different from each other in terms of the type (wire diameter or steel type) or the same as each other. The first continuous material mounting portion 4 and the second continuous material mounting portion 5 serve as continuous material feed portions W.

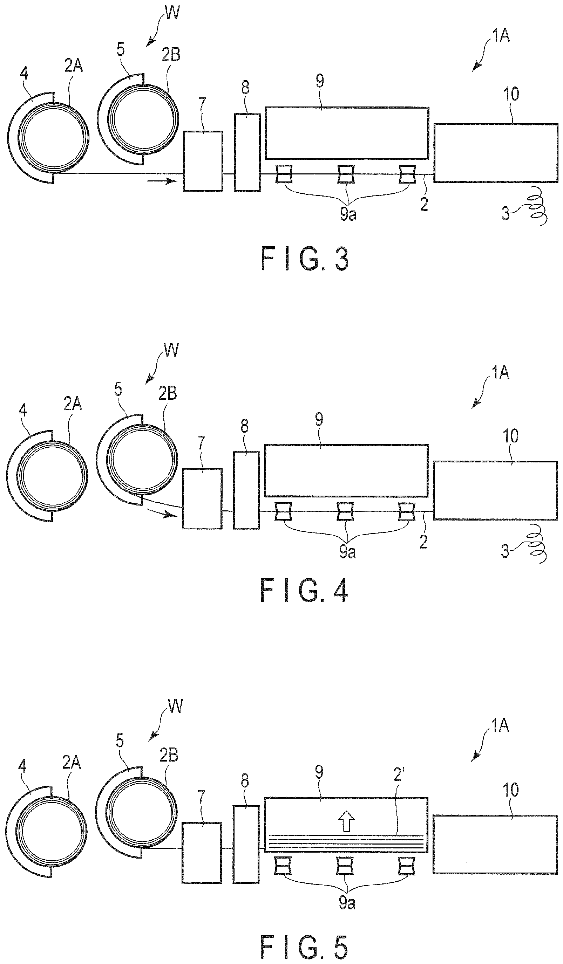

FIG. 3 illustrates a case where the coil spring 3 is manufactured from the material 2 which is reeled out from the first continuous material 2A in the coil spring manufacturing device 1A shown in FIG. 2. In this example, the material 2 which is reeled out from the continuous material 2A on the first continuous material mounting portion 4 is corrected to be straight by the straightener 7. Further, the material 2 is supplied to the coiling machine 10 via the guide rollers 9a, and the coil spring 3 is manufactured. Since the second continuous material mounting portion 5 is not used at this time, a spare time is brought about for the second continuous material mounting portion 5. By using this spare time, a continuous material (a hoop material) of a desired wire diameter or steel type can be mounted on the second continuous material mounting portion 5.

FIG. 4 illustrates a case where the coil spring 3 is manufactured by using the continuous material 2B on the second continuous material mounting portion 5. In this example, the material 2 which is reeled out from the second continuous material 2B is corrected to be straight by the straightener 7. The material 2 is supplied to the coiling machine 10 via the guide rollers 9a, and the coil spring 3 is manufactured. Since the first continuous material mounting portion 4 is not used at this time, a spare time is brought about for the first continuous material mounting portion 4. By using this spare time, a continuous material (a hoop material) of a desired wire diameter or steel type can be mounted on the first continuous material mounting portion 4.

FIG. 3 shows the state in which the coil spring is produced in quantity by using the first continuous material 2A. FIG. 4 shows the state in which the coil spring is produced in quantity by using the second continuous material 2B. When the operation is switched from the state of FIG. 3 to the state of FIG. 4, in FIG. 3, supply of the first continuous material 2A is stopped. Further, the first continuous material 2A is cut by using the cutter 8. After that, the second continuous material 2B conveyed from the second continuous material mounting portion 5 is supplied to the coiling machine 10, as shown in FIG. 4.

Conversely, the operation can be switched from a mass production state of the coil spring using the second continuous material 2B (FIG. 4) to a mass production state of the coil spring using the first continuous material 2A (FIG. 3). In this case, supply of the second continuous material 2B is stopped in FIG. 4, and the second continuous material 2B is cut by using the cutter 8. After that, the first continuous material 2A conveyed from the first continuous material mounting portion 4 is supplied to the coiling machine 10, as shown in FIG. 3.

As described above, according to the coil spring manufacturing device 1A of the present embodiment, a coil spring can be manufactured by alternately switching the continuous materials (the first continuous material 2A and the second continuous material 2B) which are different from each other in their types. More specifically, of the first continuous material mounting portion 4 and the second continuous material mounting portion 5, preparation of the material (an initial setup operation) can be carried out by using the spare time of the continuous material mounting portion not being used. Consequently, two types of coil springs can be manufactured efficiently.

A third continuous material mounting portion 6 may be provided, as shown by a two-dot chain line in FIG. 2. Alternatively, four or more continuous material mounting portions may be provided. The necessary continuous material mounting portion is selected from among these continuous material mounting portions and used, and the continuous material is also prepared by using the spare time of the continuous material mounting portion not being used. In this way, more variety of coil springs can be manufactured efficiently, and it is possible to adapt to mass production of a wide variety of springs.

FIG. 5 shows a short material manufacturing process for manufacturing the short material 2'. In this example, the material 2 (the second continuous material 2B) which is supplied from the second continuous material mounting portion 5 is corrected to be straight by the straightener 7. As the corrected material 2 is cut by the cutter 8, the short material 2' is manufactured. The short material 2' obtained by the cutting is mounted on the short material mounting portion 9.

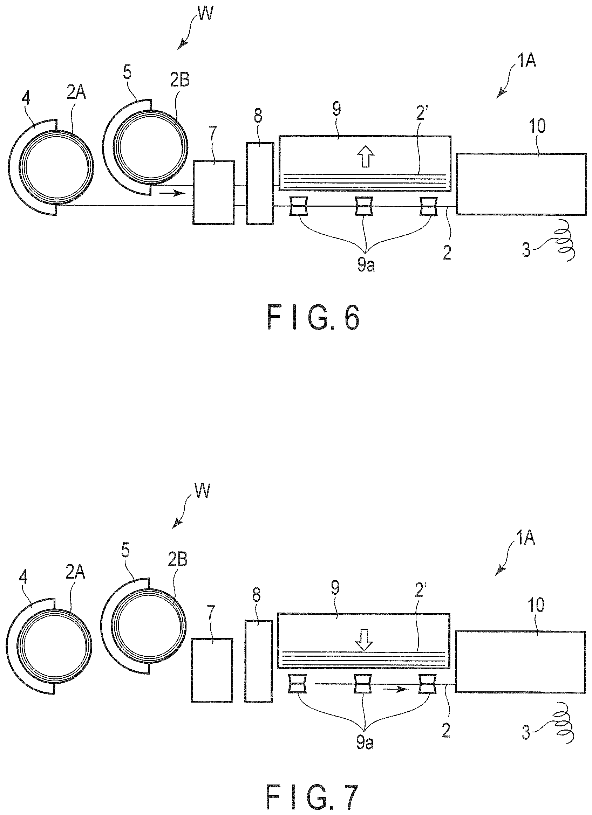

FIG. 6 shows an example in which the coil spring 3 is manufactured by using the material 2 which is reeled out from the continuous material 2A on the first continuous material mounting portion 4, and the short material 2' is manufactured by the material 2 which is reeled out from the continuous material 2B on the second continuous material mounting portion 5. In this example, as the material 2 which is reeled out from the first continuous material 2A is supplied to the coiling machine 10, the coil spring 3 is produced in quantity. Simultaneously with the above, the material 2, which is reeled out from the second continuous material 2B, is cut to a predetermined length by the cutter 8, and is mounted on the short material mounting portion 9.

FIG. 7 illustrates an example in which the coil spring 3 is manufactured by using the short material 2' mounted on the short material mounting portion 9. In this example, the material 2, more specifically, the short material 2', which is taken out one by one from the short material mounting portion 9 is supplied to the coiling machine 10, and the coil spring 3 is manufactured. Accordingly, this device is suitable for manufacturing of a wide variety of coil springs in small quantities according to the type of the short material 2'.

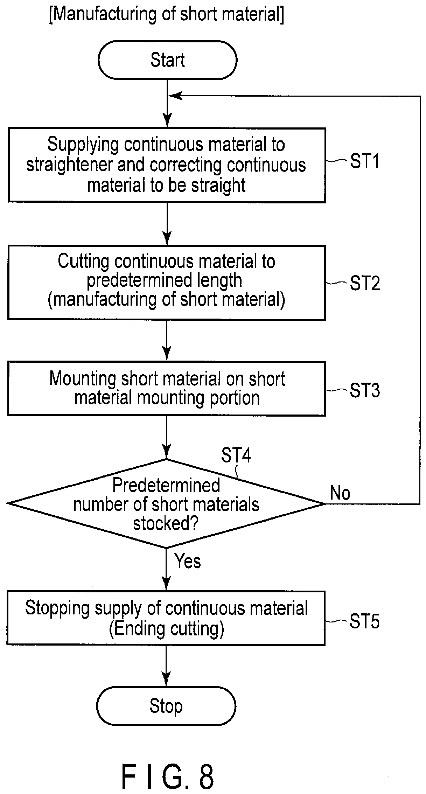

FIG. 8 is a flowchart showing an example of a short material manufacturing process. In one example of the short material manufacturing process, the short material 2' is manufactured by using the first continuous material 2A or the second continuous material 2B. For example, in step ST1 of FIG. 8, the first continuous material 2A or the second continuous material 2B is supplied to the straightener 7, and is corrected to be straight.

In step ST2, as the continuous material, which is supplied to the cutter 8, is cut to a predetermined length by the cutter 8, the short material 2' is manufactured. The short material 2', which is the material cut to the predetermined length, is mounted on the material stand of the short material mounting portion 9 in step ST3. In step ST4, when it is determined that a predetermined number of short materials 2' have been stocked, supply of the continuous material is stopped in step ST5, and the manufacturing of the short material is finished.

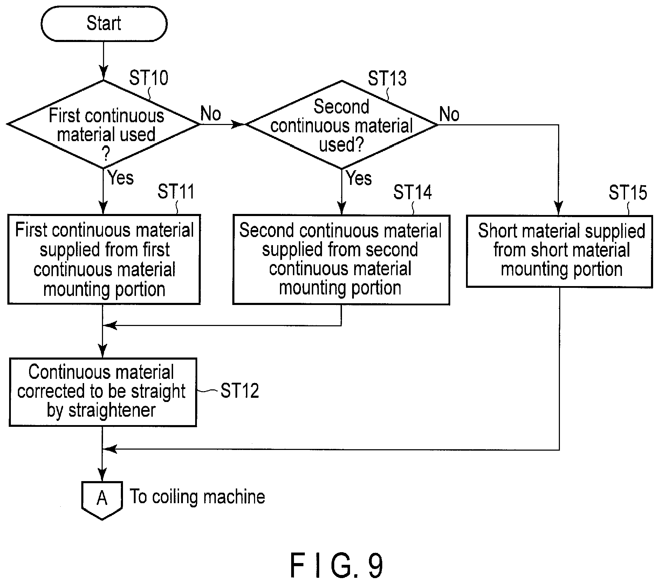

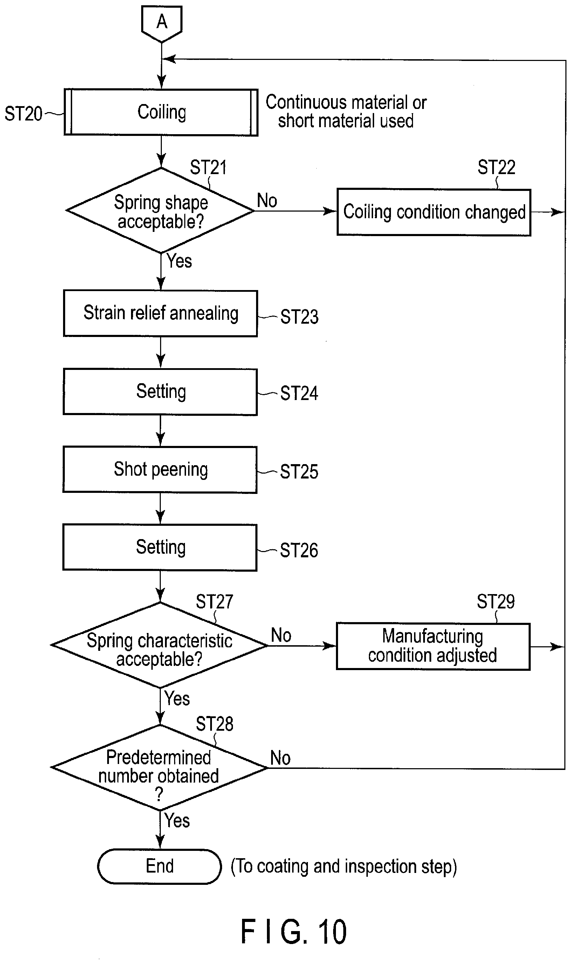

Each of FIGS. 9 and 10 is a flowchart of a case where the coil spring 3 is manufactured by the coil spring manufacturing device 1A. FIG. 9 shows steps of selecting the material, and FIG. 10 shows a coil spring manufacturing process. In step ST10 of FIG. 9, it is determined whether the first continuous material 2A is used or not. When the first continuous material 2A is to be used, the process proceeds to step ST11. In step ST11, the material 2 (the first continuous material 2A) which is placed on the first continuous material mounting portion 4 is supplied to the straightener 7. The material 2 is corrected to be straight by the straightener 7 in step ST12, and is supplied to the coiling machine 10 by passing by the cutter 8.

In step ST13 of FIG. 9, it is determined whether the second continuous material 2B is used or not. When the second continuous material 2B is to be used, the process proceeds to step ST14. In step ST14, the material 2 (the second continuous material 2B) which is placed on the second continuous material mounting portion 5 is conveyed to the straightener 7. After the material 2 has been corrected to be straight by the straightener 7 in step ST12, the material 2 is supplied to the coiling machine 10 by passing by the cutter 8.

When it is determined that the short material 2' is to be used in step ST13, the process proceeds to step ST15. In step ST15, the short material 2' mounted on the short material mounting portion 9 is supplied to the coiling machine 10 one by one via the guide rollers 9a.

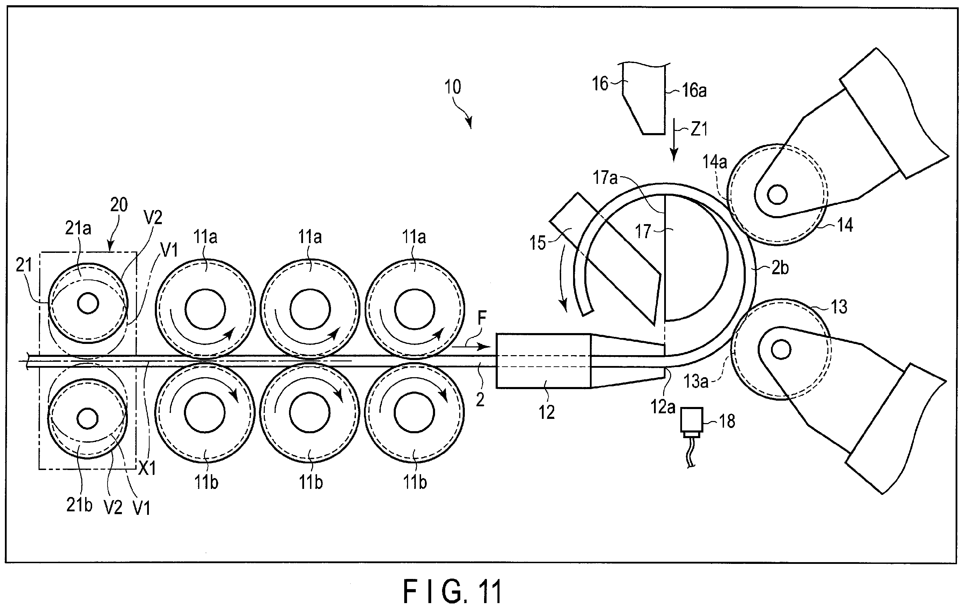

FIG. 10 is a flowchart showing the coil spring manufacturing process. In step ST20 of FIG. 10, a coil spring is manufactured by using the material 2 (the continuous material 2A or 2B, or the short material 2') conveyed to the coiling machine 10. In this specification, a case where the first continuous material 2A is used is referred to as a first continuous material coiling process, and a case where the second continuous material 2B is used is referred to as a second continuous material coiling process. Also, a case where the short material 2' is used is referred to as a short material coiling process. Note that the structure and the operation of the coiling machine 10 will be described in detail later by referring to FIGS. 11 to 21.

The shape of the coil spring 3 formed by the coiling machine 10 is inspected in step ST21 of FIG. 10. If the spring shape is rejected, the process proceeds to step ST22, and the coiling condition, etc., is changed. After that, the process returns to step ST20, and the coiling is performed again.

When it is determined that the spring shape is acceptable in step ST21, steps such as a strain relief annealing step (step ST23), a first setting step (step ST24), a shot peening step (step ST25), and a second setting step (step ST26) are carried out. Only one of the first setting step (step ST24) and the second setting step (step ST26) may be carried out. The strain relief annealing step (step ST23) is carried out in order to eliminate a processing strain of the coil spring produced by cold working. In step ST23, the coil spring is heated by using a heating furnace, for example.

In step ST27, characteristic of the spring is inspected, and if the characteristic of the spring is acceptable, the process proceeds to step ST28. In step ST28, when it is determined that a predetermined number of coil springs have been manufactured, coil spring manufacturing is finished. If the predetermined number of coil springs are not obtained, the process returns to step ST20 and the coil spring manufacturing is continued.

In step ST27, if the characteristic of the spring is determined as not being acceptable, the process proceeds to step ST29. In step ST29, the manufacturing condition, etc., is adjusted, and the process returns to step ST20 to perform the coiling again.

As described above, the present embodiment includes the first continuous material coiling process, the second continuous material coiling process, and the short material coiling process. In the first continuous material coiling process, by supplying the material reeled out from the first continuous material 2A to the coiling machine 10, the coil spring is manufactured. In the second continuous material coiling process, by supplying the material reeled out from the second continuous material 2B to the coiling machine 10, the coil spring is manufactured. In the short material coiling process, by supplying the short material 2' to the coiling machine 10, the coil spring is manufactured. By switching among the first continuous material coiling process, the second continuous material coiling process, and the short material coiling process as needed, producing a certain type of coil springs in large quantity or producing a wide variety of coil springs in small quantities can be carried out efficiently.

The structure and the operation, etc., of the coiling machine 10 will be described by referring to FIGS. 11 to 21.

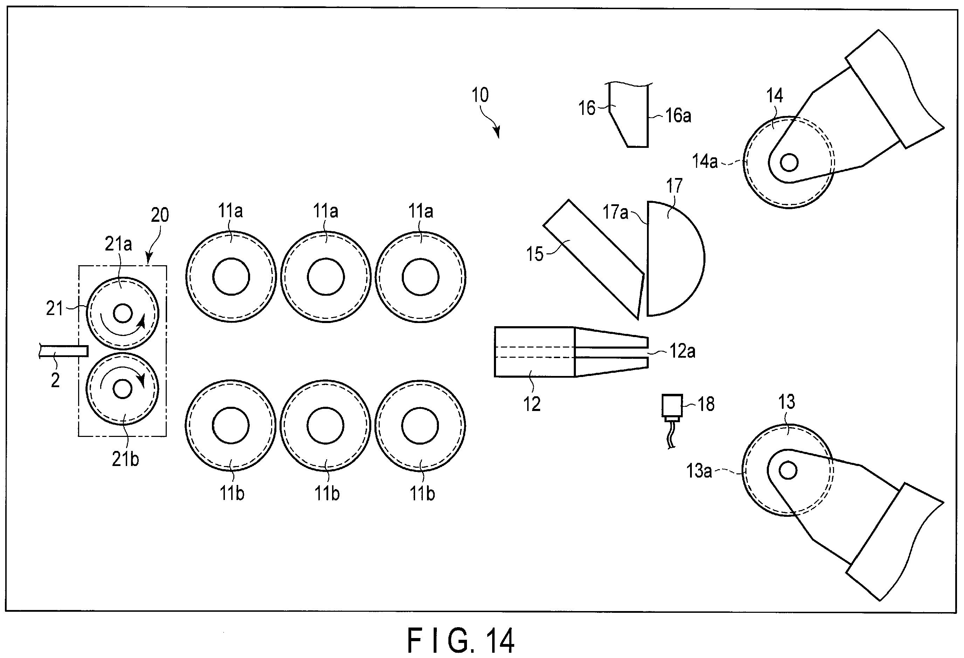

FIG. 11 schematically shows a part of the coiling machine 10. The coiling machine 10 comprises a plurality of material feed rollers (feed rollers) 11a and 11b. The material feed rollers 11a and 11b move the material 2 of the coil spring in a direction indicated by arrow F (i.e., a direction along an axis X1 of the material 2). The material feed rollers 11a and 11b can be moved between a clamping position (a position of sandwiching the material 2) shown in FIG. 11 and an unclamping position (i.e., a position of releasing the material 2) shown in FIG. 14.

The coiling machine 10 includes a material guide 12 into which the material 2 is inserted, a first pin 13, and a second pin 14. The material 2 sent out from a distal end 12a of the material guide 12 contacts the first pin 13 first. The material 2 bent by the first pin 13 contacts the second pin 14. On outer peripheral portions of the first pin 13 and the second pin 14, circumferentially continuous grooves 13a and 14a are formed, respectively. Each of the first pin 13 and the second pin 14 of the present embodiment is a roller member rotatable about an axis. In another embodiment, each of the first pin and the second pin may be a pin member which does not rotate.

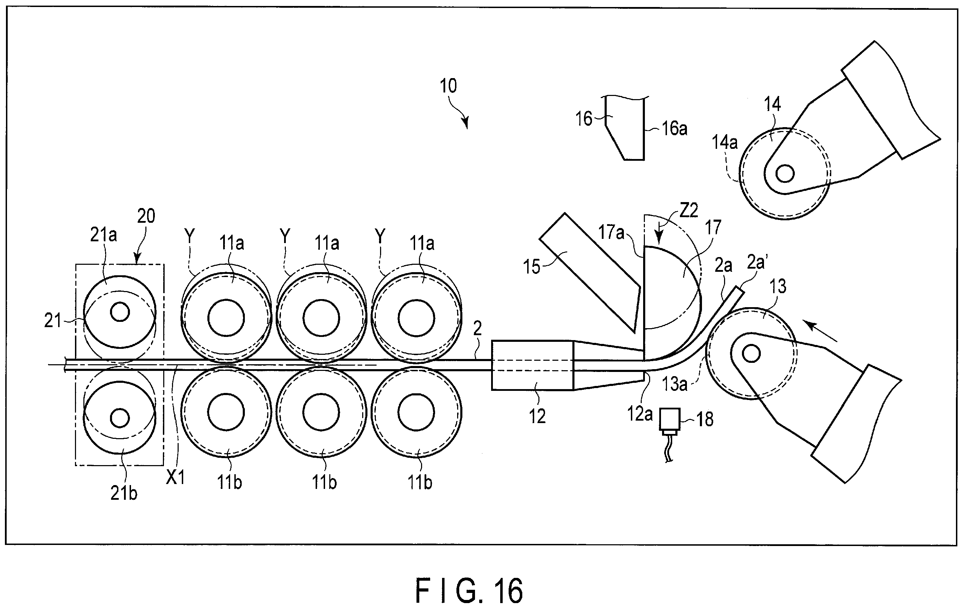

The coiling machine 10 includes a pitch tool 15, a cutting tool 16, and a mandrel 17 having a receiving blade 17a. The pitch tool 15 is arranged at a front side of a movement direction of the material 2 with respect to the second pin 14. As the material 2 bent by the second pin 14 contacts the pitch tool 15, the coil spring is pitched. The cutting tool 16 includes a blade portion 16a. When the cutting tool 16 is moved in a direction indicated by arrow Z1 (FIG. 11) toward the mandrel 17, the material 2 is cut (sheared) between the blade portion 16a and the receiving blade 17a. The mandrel 17 can be moved between a first position and a second position by an actuator. The first position is an elevated position indicated by a solid line in FIGS. 11, 14, 15, etc. The second position is a lowered position indicated by a solid line in FIG. 16.

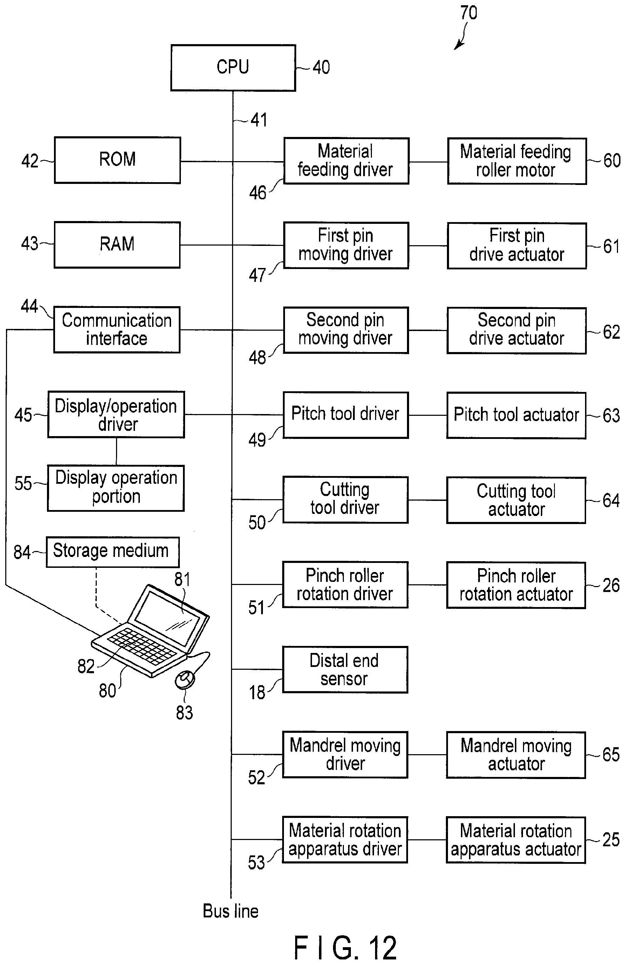

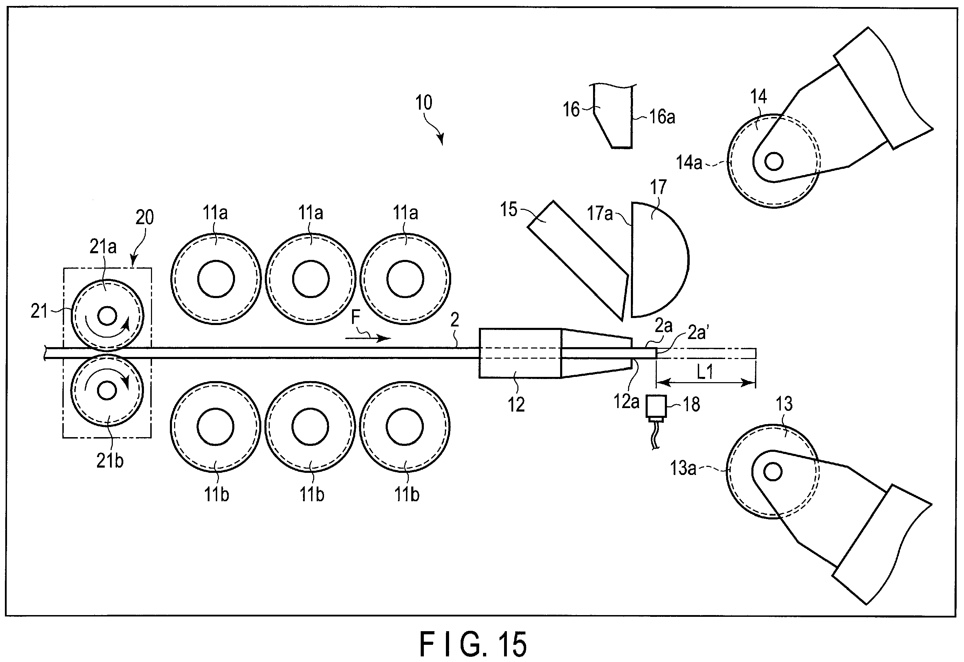

Further, the coiling machine 10 includes a sensor 18 and a material rotation apparatus 20. The sensor 18 functions as detection means for detecting a position of a distal end portion 2a (FIG. 15) of the material 2. The material rotation apparatus 20 is disposed on an upstream side of the material feed rollers 11a and 11b with respect to the movement direction of the material 2. An example of the material rotation apparatus 20 includes a pinch roller unit 21 and a rotation mechanism 25 (FIG. 12). The rotation mechanism 25 rotates the pinch roller unit 21 about the axis X1 (FIG. 11) of the material 2.

The pinch roller unit 21 includes pinch rollers 21a and 21b, an actuator 26 (FIG. 12), a pressure mechanism, etc. The pinch rollers 21a and 21b pinch the material 2 radially. The actuator 26 rotates the pinch rollers 21a and 21b in a feed direction of the material 2. The pressure mechanism urges the pinch rollers 21a and 21b in a direction in which they become close to each other. The pinch rollers 21a and 21b can be moved between a clamping position V1 shown by a two-dot chain line in FIG. 11 and an unclamping position V2 shown by a solid line.

The first pin 13 is disposed at the front side of the movement direction of the material 2 with respect to the distal end 12a of the material guide 12 (i.e., at the downstream side of the movement direction). The second pin 14 is disposed at the front side of the movement direction of the material 2 with respect to the first pin 13. The material 2 sent out from the distal end 12a of the material guide 12 toward the first pin 13 is bent between the material guide 12 and the first pin 13 with the distal end 12a of the material guide 12 being a substantial bend starting point.

FIG. 12 is a block diagram showing an electrical structure of the coiling machine 10. The coiling machine 10 comprises a central processing unit (CPU) 40 which functions as a controller. To the CPU 40, through a bus line 41, a read only memory (ROM) 42, a random access memory (RAM) 43, a communication interface portion 44, a display/operation driver 45, a material feeding driver 46, a first pin moving driver 47, a second pin moving driver 48, a pitch tool driver 49, a cutting tool driver 50, a pinch roller rotation driver 51, a mandrel moving driver 52, a rotation mechanism driver 53, the sensor 18, etc., are connected.

In the ROM 42, a program for controlling the CPU 40 and various kinds of fixed data are stored. The RAM 43 includes a memory area in which various kinds of data, etc., necessary for forming a coil spring is stored. The communication interface portion 44 controls data communication performed with external devices through a communication line (a network). The display/operation driver 45 controls a display operation portion 55 comprising a display (a display panel). By operating the display operation portion 55, information necessary for forming the coil spring can be stored in the memories such as the RAM 43.

The material feeding driver 46 controls a motor 60 for rotating the material feed rollers 11a and 11b. The first pin moving driver 47 controls a first pin drive mechanism 61 comprising an actuator for driving the first pin 13. The second pin moving driver 48 controls a second pin drive mechanism 62 comprising an actuator for driving the second pin 14. The pitch tool driver 49 controls a pitch tool drive mechanism 63 comprising an actuator for driving the pitch tool 15. The cutting tool driver 50 controls a cutting tool drive mechanism 64 comprising an actuator for driving the cutting tool 16. The pinch roller rotation driver 51 controls the actuator 26 of the pinch roller unit 21. The mandrel moving driver 52 controls a mandrel moving actuator 65 for moving the mandrel 17 (up and down, for example). The rotation mechanism driver 53 controls an actuator of the rotation mechanism 25.

The electrical structure including the CPU 40 of the coiling machine 10 includes, for example, a control circuit for controlling the rotation of the rollers 11a and 11b, a control circuit for controlling the pin drive mechanisms 61 and 62, a control circuit for controlling the pitch tool drive mechanism 63, and a control circuit for controlling the cutting tool drive mechanism 64. These control circuits function as a control unit 70 which controls the operation or the like of the coiling machine 10. The control unit 70 controls the pin drive mechanisms 61 and 62 such that the positions of the first pin 13 and the second pin 14 are changed in accordance with shape data (for example, a coil diameter) of the coil spring that has been input.

A personal computer 80 can be connected to the control unit 70 of the present embodiment through the communication interface portion 44. The personal computer 80 includes a display unit 81 including a display panel, an input operation portion 82 including a keyboard, a pointing device 83 such as a mouse, etc. The personal computer 80 includes a storage medium 84 which is removably attached, if necessary.

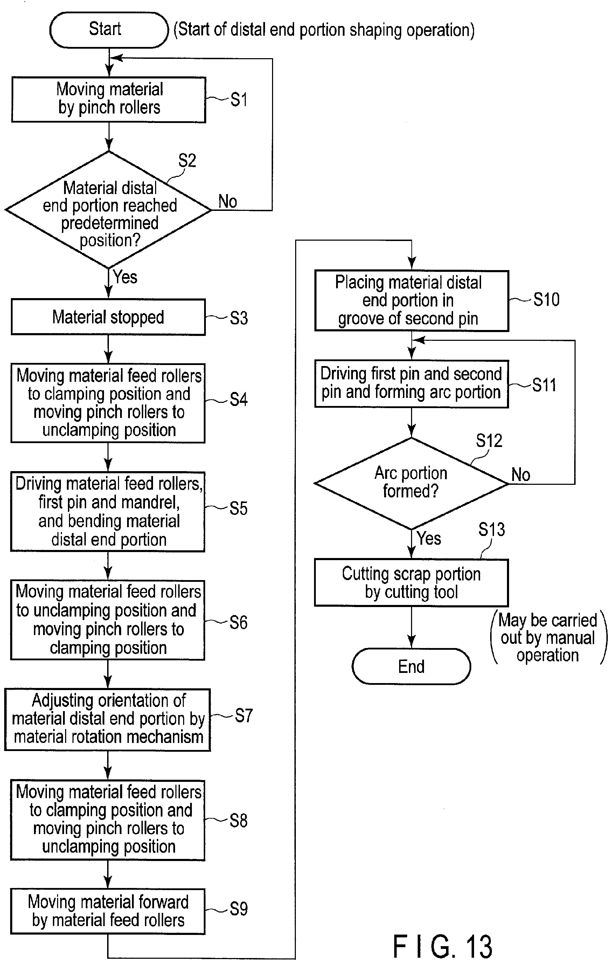

Hereinafter, a distal end portion shaping operation will be described by referring to FIGS. 13 to 21. The distal end portion shaping operation is an operation which is performed first when starting the forming of the coil spring, that is, the operation of forming the distal end portion 2a of the material 2. This distal end portion shaping operation is automated by the CPU 40 based on a computer program stored in the control unit 70 and the shape data for control.

FIG. 13 is a flowchart showing an example of a function of a computer program stored in the control unit 70. This computer program is activated when performing the distal end portion shaping operation of the coil spring. However, depending on the situation, a part of the distal end portion shaping operation may be carried out manually by a worker.

FIG. 14 shows the coiling machine 10 before the material 2 is supplied. The material feed rollers 11a and 11b wait in a position separated from each other vertically (i.e., in the unclamping position) so as not to obstruct movement of the material 2.

In step S1 of FIG. 13, the material 2 is moved toward the material guide 12 by the pinch rollers 21a and 21b. Consequently, the distal end portion 2a of the material 2 moves forward toward the first pin 13. At this time, the pinch rollers 21a and 21b are moved to the clamping position. The material feed rollers 11a and 11b are moved to the unclamping position. When the material 2 is moved forward toward the material guide 12, the distal end portion 2a of the material 2 projects from the distal end 12a of the material guide 12, as shown in FIG. 15.

In step S2 of FIG. 13, it is determined whether the distal end portion 2a has reached a predetermined position or not. If the distal end portion 2a has not reached the predetermined position, the process returns to step S1 and the material 2 is further moved forward. For example, when the distal end portion 2a of the material 2 is detected by the detection means (sensor 18), the process proceeds to step S3 and the movement of the material 2 is stopped. At this time, the distal end portion 2a of the material 2 may be stopped at a position projected from the distal end 12a of the material guide 12 by a predetermined distance L1.

In step S4 of FIG. 13, the material feed rollers 11a and 11b are moved to the clamping position. As a result, the material 2 is sandwiched between the material feed rollers 11a and 11b, and the pinch rollers 21a and 21b are moved to the unclamping position. Thus, the material 2 is moved by the material feed rollers 11a and 11b.

In step S5, the material 2 sandwiched between the material feed rollers 11a and 11b is moved toward the first pin 13, as shown in FIG. 16. As the first pin 13 is driven in a state in which the distal end portion 2a of the material 2 has reached the first pin 13, the distal end portion 2a is bent by the first pin 13. For example, the distal end portion 2a of the material 2 is bent in a direction of approaching the mandrel 17 by the first pin 13. At this time, the mandrel 17 is moved in a direction indicated by arrow Z2 from the first position indicated by a two-dot chain line in FIG. 16. In other words, a lower surface of the mandrel 17 is switched from the first position to the second position closest to the distal end 12a of the material guide 12. After the distal end portion 2a of the material 2 has been bent by the first pin 13, the mandrel 17 is moved back to the first position (shown by the two-dot chain line in FIG. 16).

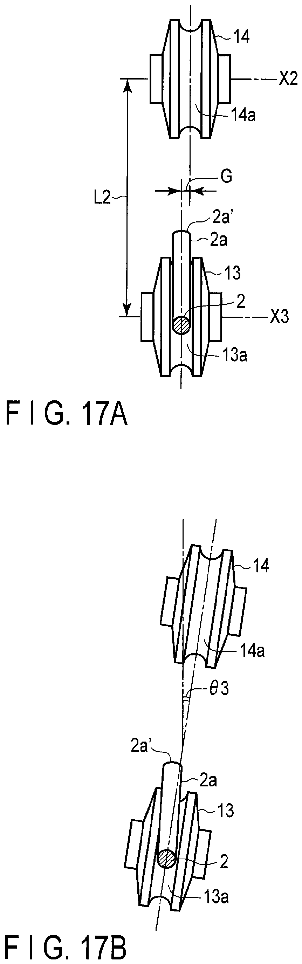

It is assumed that positions of the first pin 13 and the second pin 14 are separated from each other by distance G in a direction along axes X2 and X3 of the pins, as shown in FIG. 17A. If the distal end portion 2a of the material 2 is moved forward toward the second pin 14 in this state, the distal end portion 2a of the material 2 may be deviated from a groove 14a of the second pin 14. In particular, the greater distance L2 between the first pin 13 and the second pin 14 becomes, the more it is likely that the distal end portion 2a will be deviated from the groove 14a of the second pin 14. Accordingly, conventionally, the worker needed to correct the orientation of the distal end portion 2a of the material 2 by a jig, etc.

As shown in FIG. 17B, it is assumed that the second pin 14 is inclined at angle θ3 ahead of the first pin 13. Also in this case, when the distal end portion 2a of the material 2 is moved forward, the distal end portion 2a may be deviated from the groove 14a of the second pin 14. Accordingly, the worker needed to correct the orientation of the distal end portion 2a of the material 2 by a jig, etc.

In contrast, in the case of the present embodiment, the material 2 is rotated about axis X1 by the pinch rollers 21a and 21b. More specifically, in a state in which the distal end portion 2a of the material 2 is bent by the first pin 13, as shown in FIG. 16, the material 2 is rotated about axis X1 by the pinch rollers 21a and 21b. At this time, the mandrel 17 is moved to the second position (shown by the two-dot chain). The distal end portion 2a of the material 2 is located between the first pin 13 and the second pin 14.

The above operations are carried out in steps S6 and S7 of FIG. 13. That is, the material feed rollers 11a and 11b are moved to the unclamping position (shown by two-dot chain line Y in FIG. 16). Also, the pinch rollers 21a and 21b are moved to the clamping position (step S6). In this state, by driving the material rotation apparatus 20, the pinch roller unit 21 is rotated such that the distal end portion 2a of the material 2 faces the groove 14a of the second pin 14 (step S7).

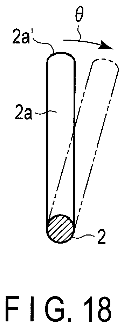

As the material 2 is rotated about axis X1, the distal end portion 2a of the material 2 is inclined by angle θ as shown in FIG. 18. In this way, when the distal end portion 2a of the material 2 is moved from the first pin 13 toward the second pin 14, the distal end portion 2a can be placed in the groove 14a of the second pin 14.

In step S8 of FIG. 13, the material feed rollers 11a and 11b are moved to the clamping position. Also, the pinch rollers 21a and 21b are moved to the unclamping position. Further, as the material feed rollers 11a and 11b are rotated and the material 2 is moved forward (step S9), the distal end portion 2a enters the groove 14a of the second pin 14 (step S10).

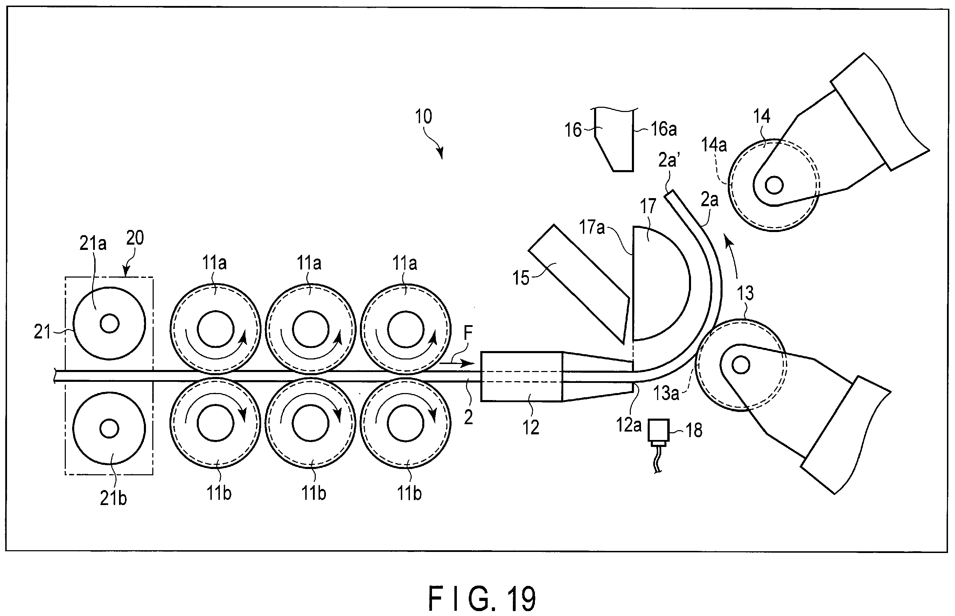

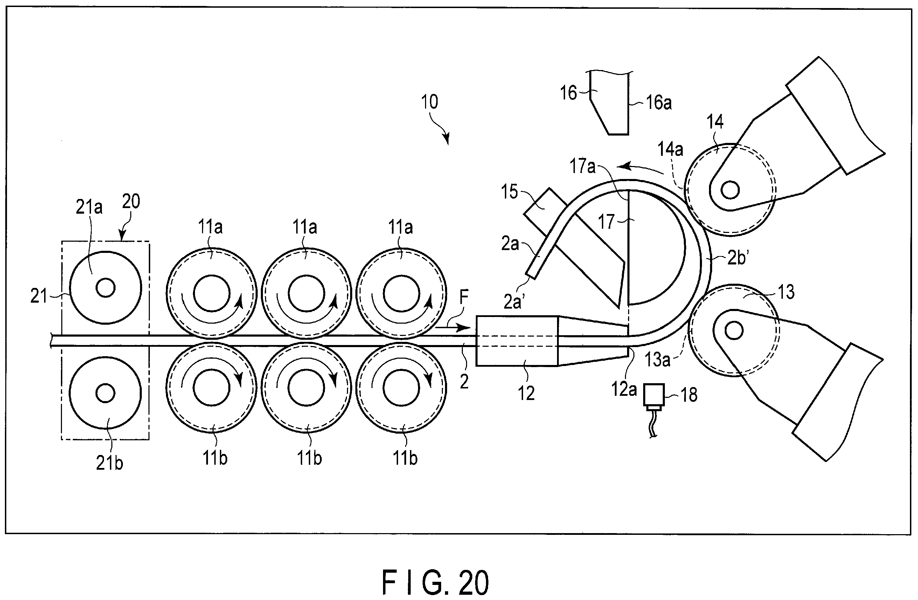

By moving the material 2 further by the material feed rollers 11a and 11b, as shown in FIG. 19, the distal end portion 2a of the material 2 is placed between the second pin 14 and the mandrel 17. Further, while moving the material 2, the first pin 13 and the second pin 14 are driven, and the distal end portion 2a is bent between first pin 13 and the second pin 14. In this way, a distal-end-side arc portion 2b' is formed as shown in FIG. 20 (steps S11 and S12 of FIG. 13).

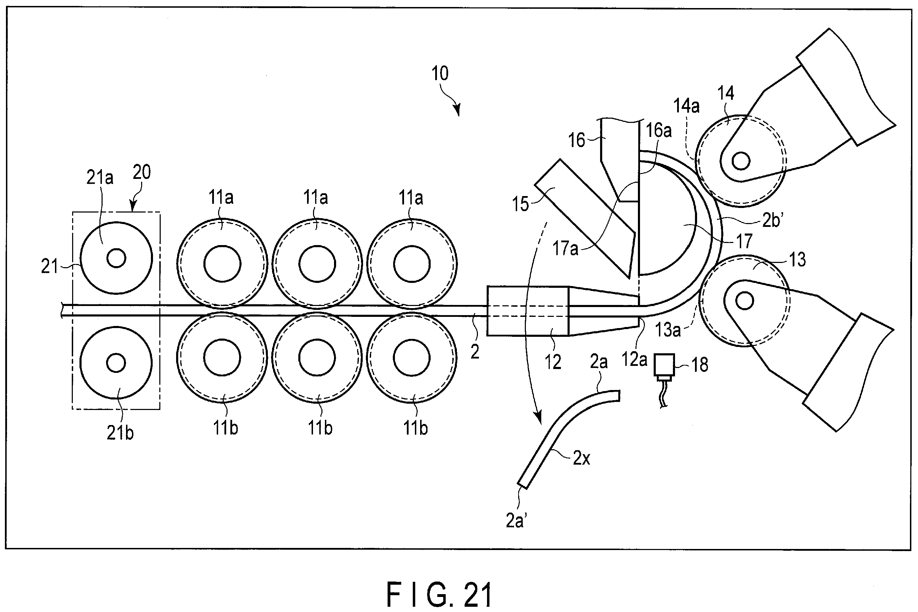

After the distal-end-side arc portion 2b' of a predetermined shape has been formed, by moving the cutting tool 16 toward the receiving blade 17a as shown in FIG. 21, a scrap portion 2x at the front end side is cut off (step S13 of FIG. 13). Although this cutting operation (step S13) is performed automatically, the worker may perform the cutting operation manually in some cases. In other words, by having the worker check the situation of the coil spring and operate a switch such as a button if no abnormality is found, the cutting tool 16 is operated to cut the scrap portion 2x. By way of a series of steps described above, the distal end portion shaping operation of a coil spring 3 is finished.

When the scrap portion 2x is cut off, the distal-end-side arc portion 2b' is left. The distal-end-side arc portion 2b' constitutes a part of the coil spring (i.e., an end turn portion). After the above process, by continuously moving the material 2 by the material feed rollers 11a and 11b, the coil spring 3 is formed (coiled). More specifically, the material 2 discharged from the distal end 12a of the material guide 12 is moved toward the second pin 14 via the first pin 13. As the material 2 is formed in an arc shape by the first pin 13 and the second pin 14, an arc portion 2b is formed continuously as shown in FIG. 11.

After a radius of curvature of the arc portion 2b is minimized between the first pin 13 and the second pin 14, the radius of curvature gradually increases as the arc portion 2b approaches the pitch tool 15 because of a springback effect. Accordingly, considering the springback effect, a position of the second pin 14, etc., is controlled. When one coil spring is formed, by the operation of the cutting tool 16, a rear end of the coil spring (a front end of a coil spring to be formed next) is cut. When a continuous material such as the first continuous material 2A or the second continuous material 2B is used, forming of the next one coil spring is performed continuously. When the short material 2' is used, a coil spring of a number corresponding to the length of the short material 2' (for example, one) is formed.

As described above, a method of shaping a distal end portion of a coil spring of the present embodiment includes the following steps automated by the control unit 70:
(1) Moving the material 2 toward the material guide 12;
(2) Detecting the position of the distal end portion 2a of the material 2 which has been sent out from the material guide 12;
(3) Moving the mandrel 17 toward the second position;
(4) Bending the distal end portion 2a in a direction of approaching the mandrel 17 by the first pin 13;
(5) Moving the mandrel 17 to the first position;
(6) Moving the material feed rollers 11a and 11b to the unclamping position;
(7) Rotating the material 2 about axis X1 so that the distal end portion 2a of the material 2 is directed toward the groove 14a of the second pin 14;
(8) Moving the material feed rollers 11a and 11b to the clamping position;
(9) Moving the material 2 by the material feed rollers 11a and 11b, thereby placing the distal end portion 2a in the groove 14a of the second pin 14;
(10) Forming the distal-end-side arc portion 2b' by bending the material 2 between the first pin 13 and the second pin 14; and
(11) Cutting off the scrap portion 2x ahead of the distal-end-side arc portion 2b' by the cutting tool 16.

### Industrial Applicability

Needless to say, in carrying out the present invention, the form such as the structure and arrangement of each of the elements which constitute the coil spring manufacturing device, including the continuous material mounting portion on which a continuous material such as a hoop material is mounted, the short material mounting portion, the straightener, and the cutter, may be modified variously if necessary. For example, for the guide means for guiding the material to the coiling machine, a guide member having a shape different from the guide rollers 9a may be used. Further, as a matter of course, constituent elements of the coiling machine such as the first pin and the second pin, the pitch tool, and the cutting tool can also be modified variously in embodying the present invention, if necessary.

### Reference Signs List

1, 1A··· Coil spring manufacturing device, 2··· Material, 2a··· Distal end portion, W··· Continuous material feed portion, 2A··· First continuous material, 2B··· Second continuous material, 2'··· Short material, 3··· Coil spring, 4··· First continuous material mounting portion, 5··· Second continuous material mounting portion, 6··· Third continuous material mounting portion, 7··· Straightener, 8··· Cutter, 9··· Short material mounting portion, 9a··· Guide roller (guide means), 10··· Coiling machine, 11a, 11b··· Material feed rollers, 12··· Material guide, 12a··· Distal end of material guide, 13··· First pin, 13a··· Groove, 14··· Second pin, 14a··· Groove, 15··· Pitch tool, 16··· Cutting tool, 17··· Mandrel, 18··· Sensor (detection means), 20··· Material rotation apparatus, 21··· Pinch roller unit, 21a, 21b··· Pinch rollers, 70··· Control unit

## Claims

1. A coil spring manufacturing device comprising:
a coiling machine (10);
a continuous material feed portion (W) which supplies a material (2) reeled out from a continuous material (2A) (2B) wound like a hoop to the coiling machine (10);
a straightener (7) which is disposed between the continuous material feed portion (W) and the coiling machine (10), and is configured to correct the material (2) reeled out from the continuous material (2A) (2B) to be straight;
a cutter (8) which is disposed at a downstream side of a movement direction of the material (2) with respect to the straightener (7), and is configured to cut the material (2);
a short material mounting portion (9) on which a short material (2') cut to a predetermined length is mounted; and
guide means (9a) for supplying the material (2) reeled out from the continuous material feed portion (W) or the short material (2') taken out from the short material mounting portion (9) to the coiling machine (10) .

2. The coil spring manufacturing device of Claim 1, wherein the continuous material feed portion (W) includes a first continuous material mounting portion (4) on which a first continuous material (2A) composed of the material (2) wound like a hoop is mounted, and a second continuous material mounting portion (5) on which a second continuous material (2B) composed of the material (2) wound like a hoop is mounted.

3. The coil spring manufacturing device of Claim 1, wherein the coiling machine (10) includes:
a material feed roller (11a) (11b) which moves the material (2);
a material guide (12) into which the material (2) is inserted;
a first pin (13) where the material (2) sent out from a distal end of the material guide (12) contacts;
a second pin (14) which is disposed at a front side of a movement direction of the material (2) with respect to the first pin (13), and is configured to form an arc portion (2b) between the first pin (13) and the second pin (14) by bending the material (2) between the first pin (13) and the second pin (14);
a pitch tool (15) where the material (2) contacts, the pitch tool (15) being disposed at the front side of the movement direction of the material (2) with respect to the second pin (14);
a cutting tool (16) which is disposed between the second pin (14) and the pitch tool (15), and is configured to cut the material (2) between the cutting tool (16) and a mandrel (17); and
a control unit (70) which automates a distal end portion shaping operation of the material (2), wherein
the control unit (70) comprises:
means for advancing a distal end portion (2a) of the material (2) toward the first pin (13);
detection means for detecting a position of the distal end portion (2a) of the material (2);
means for bending the distal end portion (2a) in a direction of approaching the mandrel (17) by the first pin (13) in a state in which the distal end portion (2a) reached the first pin (13); and
means for forming a distal-end-side arc portion (2b) by bending the distal end portion (2a) between the first pin (13) and the second pin (14).

4. The coil spring manufacturing device of Claim 2, wherein the coiling machine (10) includes:
a material feed roller (11a) (11b) which moves the material (2);
a material guide (12) into which the material (2) is inserted;
a first pin (13) where the material (2) sent out from a distal end of the material guide (12) contacts;
a second pin (14) which is disposed at a front side of a movement direction of the material (2) with respect to the first pin (13), and is configured to form an arc portion (2b) between the first pin (13) and the second pin (14) by bending the material (2) between the first pin (13) and the second pin (14);
a pitch tool (15) where the material (2) contacts, the pitch tool (15) being disposed at the front side of the movement direction of the material (2) with respect to the second pin (14);
a cutting tool (16) which is disposed between the second pin (14) and the pitch tool (15), and is configured to cut the material (2) between the cutting tool (16) and a mandrel (17); and
a control unit (70) which automates a distal end portion shaping operation of the material (2), wherein
the control unit (70) comprises:
means for advancing a distal end portion (2a) of the material (2) toward the first pin (13);
detection means for detecting a position of the distal end portion (2a) of the material (2);
means for bending the distal end portion (2a) in a direction of approaching the mandrel (17) by the first pin (13) in a state in which the distal end portion (2a) reached the first pin (13); and
means for forming a distal-end-side arc portion (2b) by bending the distal end portion (2a) between the first pin (13) and the second pin (14).

5. A method for manufacturing a coil spring comprising:
a first continuous material coiling process (ST11) (ST20) of manufacturing the coil spring by supplying a material (2) reeled out from a hooplike first continuous material (2A) mounted on a first continuous material mounting portion (4) to a coiling machine (10) ;
a second continuous material coiling process (ST14) (ST20) of manufacturing the coil spring by supplying the material (2) reeled out from a hooplike second continuous material (2B) mounted on a second continuous material mounting portion (5) to the coiling machine (10);
a short material manufacturing process (ST1-ST5) of manufacturing a short material (2') by cutting the first continuous material (2A) or the second continuous material (2B) to a predetermined length; and
a short material coiling process (ST15) (ST20) of manufacturing the coil spring by supplying the short material (2') to the coiling machine (10), wherein
a plurality of kinds of coil springs are manufactured by switching among the first continuous material coiling process (ST11) (ST20), the second continuous material coiling process (ST14) (ST20), and the short material coiling process (ST15) (ST20).
